Europäisches Patentamt

(19) European Patent Office

Office européen des brevets

(11) Publication number: **0 106 593**
**A2**

(12) **EUROPEAN PATENT APPLICATION**

(21) Application number: **83305840.7**

(22) Date of filing: **28.09.83**

(51) Int. Cl.³: **B 29 D 7/04**
**D 21 F 1/02, B 05 B 1/30**
**B 05 B 12/00, B 05 C 5/02**

(30) Priority: **11.10.82 GB 8228998**
**09.02.83 GB 8303614**

(43) Date of publication of application:
**25.04.84 Bulletin 84/17**

(84) Designated Contracting States:
**AT BE CH DE FR GB IT LI NL SE**

(71) Applicant: **The Wiggins Teape Group Limited**
**P.O. Box 88 Gateway House Basing View**
**Basingstoke Hampshire RG21 2EE(GB)**

(72) Inventor: **Herdman, Peter Thomas**
**157 Cressex Road**
**High Wycombe Buckinghamshire(GB)**

(74) Representative: **Allam, Peter Clark et al,**
**LLOYD WISE, TREGEAR & CO. Norman House 105-109**
**Strand**
**London WC2R 0AE(GB)**

(54) Nozzle control apparatus.

㊙ An elongate nozzle (30), such as provided by a slice (20) in the delivery of feed stock from a headbox (12) to the Foudrinier wire (24) of a paper-making machine or by the lips of a sheet plastics extrusion die, has its delivery height profile (5) adjustable at points along the nozzle (30) by electro-hydraulic actuator devices (40) which are coupled to the upper slice lip (26) or one lip of the extrusion die. Each device (40) comprises a servo motor (130) whose piston (48) is coupled to the lip (26) and an electrically energized torque motor (110) which controls the servo motor (130) via a servo control valve (120). Each actuator (40) has a linear voltage differential transformer (LVDT) (60) connected with it to measure the local delivery height (5) of the nozzle (30). The torque motor (110) is controlled by an error signal dependent on the difference between an input signal (136) representing a desired height and a signal (132) from the LVDT representing actual height. In a paper-making machine the actuators (40) may be controlled by a computer (150) that determines a nozzle profile (5) in dependence upon a grammage profile measurement made on the paper web (174). The hydraulic fluid for a paper-making machine is preferably water-based to minimise contamination if leakage occurs.

Fig.1.

./...

FIG.3.

- 1 -

Title: <u>Controlled Elongate Nozzle for Material Delivery</u>

<u>BACKGROUND TO THE INVENTION</u>

This invention relates to apparatus for controlling the delivery of a flowable material through an elongate nozzle whose long edges are relatively displaceable to adjust the delivery height of the nozzle. On paper machines, such nozzles are normally used to deliver the stock constituting the flowable material in a horizontal plane so that it is appropriate to refer to the delivery height of the nozzle. In plastics film extrusion the film may be delivered vertically. The term "delivery height" will be used generally to mean the separation between the long edges of the nozzle. More particularly the invention is concerned with such apparatus in which the delivery height of the nozzle is to be differentially adjusted along its length so as to obtain a desired nozzle profile.

One application of such apparatus is in a paper-making machine for controlling the delivery of feed-stock from a headbox to a Foudrinier wire. The nozzle in that case is defined by what is called a slice comprising upper and lower parts, which in certain types of slice may be referred to as lips, with usually the lower part fixed and the upper part adjustable relative thereto at a number of points across the width of the nozzle. The term "across the width" is generally used herein to refer to the elongate direction of the nozzle transverse to the direction of material flow.

The principles and teachings of the present invention will be particularly discussed in relation to slice control in a paper-making machine, but it is considered that the invention may find more general application in controlling the delivery of other flowable materials through an elongate nozzle. A particular example is the extrusion of plastics material in a sheet through a die that has upper and lower lips or blades defining the elongate nozzle through which the plastics material is extruded to form the sheet.

DESCRIPTION OF THE PRIOR ART

As already mentioned, the invention will be particularly discussed with reference to slice control in a paper-making machine. Still more particularly, the discussion will be given with reference to a projection slice having an upper and a lower lip shaped to provide a transverse horizontal nozzle for projecting the stock on to the wire on which the web is formed. However, the invention is applicable with other types of slice such as the vertically-acting gate slice. In a typical projection slice the lower slice lip is fixed extending away from the headbox while the upper slice lip is pivotally mounted at the headbox such that the position of the lip is adjustable to control the height, (i.e. the vertical extent) of the slice opening.

In order to properly control the height of the slice opening, it has been long established practice to mount a number of adjustment devices across the slice and connected at a series of points to the upper lip. These devices often included mechanical aids such as jacks or motor drives but were essentially manually operated. Selective adjustment of the devices is required to maintain a desired grammage profile for the paper across the web.

Published European patent application 0046434 describes an adjustment device which comprises a rod held at one end and having its other end connected to the upper lip of a projection slice. An electrical heater element associated with the rod is controllably energized to control the length of the rod by virtue of control of its temperature.    Such length control based on thermal expansion is
itself known having been previously used for controlling the

- 4 -

positioning of dies in the extrusion of plastics (this is discussed further below). To obtain the control required in paper-making and importantly, to do so without backlash, requires the individual rods to be about one metre in length. The rods need to be close spaced across the upper slice lip. From ten up to eighty, and typically thirty, rods are required. The installation becomes both bulky and expensive.

To enable the correct setting to be made of the adjustment devices, whether of the thermal type or the others mentioned, a monitor gauge or gauges may be located downstream to measure the paper grammage across the web from which adjustment information is obtained. Modern paper-making requires increasingly close control of the web characteristics and it is desirable to provide a means of adjusting the height of the slice opening that is readily integrated into a modern automatic control system. At the same time the adjustment arrangement should be as compact as possible, while providing accurate control at relatively low cost.

In practice for an accurate control system, it is desirable to make a measurement of the height of the slice opening at the slice itself. British patent specification 2,038,386 - International (PCT) publication WO 79/00643 - discloses the use of a differential transformer in making such a measurement. This specification is concerned with a gate-slice in which a profile bar is movable with respect to a transverse girder, the local adjustment across the web width being made by mechanical screw devices arranged across the width of the web. Each such device has a respective differential transformer associated with it fixed between the profile bar and the support girder. The measurement of the local position of the profile bar with respect to the lower slice lip is done on the basis that the girder is sufficiently rigid so that it does not move relative to the lower slice lip. The differential transformers in this case are not connected as part of a control system. Their outputs are individually displayed on digital indicators or recorded on a chart recorder.

In the general control of the positioning of the slice lip in a projection lip or of the profile bar in a gate-slice, it is important the lip or bar should not be distorted to such a degree that it exceeds the elastic limit since this would result in a permanent set thereby damaging the slice. Where the profile control is exercised as part of an overall control system, the system may include special control facilities to prevent such an occurrence. Otherwise some form of fail safe spring linkage can be used in the adjustment devices. The control option is cumbersome and not, in practice, totally safe: the spring linkage usually results in some undue backlash.

By adoption of the present invention it becomes possible to readily control the upper limit of the force applied locally to the slice. The adjustment device embodying the invention described hereinafter employs an electro-hydraulic actuator which enables accurate control of the upper force limit to be obtained. It also includes means for measuring the local width (delivery height) of the slice and it is integratable into an automatic control system.

The present invention can be applied in connection with a plastics extrusion die. Such dies are known, for example, from United States Patents 3,940,221 (Nissel) and 2,938,231 (Lowey): both describe extrusion dies for sheet formation with control means by which the nozzle delivery height between the die lips is adjustable, such adjustment being applied at points along the nozzle length to obtain a desired nozzle profile. The control means uses thermally controlled rods whose expansion and contraction with temperature is used to adjust the position of one of the die lips or blades with respect to the other. The reader is directed to those patents for a fuller description of the dies and the manner in which they are adjusted.

The Nissel patent discloses the use of a downstream gauge to monitor the thickness of plastic sheet or film across its width. The measurements are used to generate error signals for each thermally controlled rod in dependence on whether the measured thickness at the portion of the film or sheet aligned with the rod is greater or less than the desired thickness. The control exercised appears to be to simply heat or let cool the relevant rod without any measure of the delivery height at the nozzle itself and without attention being given to the effect of the setting of adjacent rods. In addition any thermal control involves a time delay and fast precise adjustment is not possible.

SUMMARY OF THE INVENTION

Broadly stated, the invention is concerned with apparatus comprising first and second relatively displaceable parts defining an elongate nozzle through which a flowable material is deliverable, the parts being relatively displaceable to control the delivery height of the nozzle and control means for adjusting the delivery height comprising a plurality of adjustment devices mounted at locations along the length of the nozzle and each connected to one of said parts to locally adjust the delivery height.

In such apparatus, in accord with the invention each adjustment device comprises an actuator including an hydraulic servo motor having an output member connected to the said one part and means for controlling the servo motor in response to an input signal representing a desired local position of the said one part to which the device is connected, a displacement measuring device connected to said output member to provide a signal representing the position of said output member, and said control means including means for comparing the input signal with the position signal to control the servomotor in dependence upon the comparison.

Conveniently each adjustment device is connected to the first part and the second part is made fixed.

A more particular application of the invention is to a paper-making machine in which feed stock is delivered from a headbox on to a wire through a slice for controlling the delivery of the stock, the slice comprising a movable part extending across the wire to control the delivery height of the slice, and the machine including a plurality of adjustment devices mounted at locations across the wire and connected to the movable part to locally adjust the delivery height.

In such a machine, in accord with the invention each adjustment device comprises an actuator including an hydraulic servo motor having an output member connected to said part and means for controlling the servo motor in response to an input signal representing a desired local position of said part, a displacement measuring device connected to said output member to provide a signal representing the position of said output member, and said control means including means for comparing the input signal with the position signal to control the servomotor in dependence upon the comparison.

In the apparatus of the invention and specifically in the paper-making machine in accord with the invention, it is preferred that control means comprises a servocontrol valve to control the flow of pressure fluid to said servomotor and an electrically energized motor to control the position of said servocontrol valve, said electrically energized motor being energized by a signal dependent on the comparison of the input signal and the position-representing signal.

Furthermore in one embodiment of the apparatus said displacement measuring device comprises two relatively movable portions whose relative displacement is sensed, one portion being coupled to the output member of the servo motor and the other portion supported fixedly with respect to the second fixed part, which in the case of the above paper-making machine is the second fixed part of the slice. The support in this case in the paper-making machine may be a rigid beam that is considered to be fixed with respect to the fixed part of the slice. In an alternative support the other portion of the displacement measuring device is supported fixedly with respect to the bed of the apparatus or machine which may be expected to provide an even more rigid datum than a fixed beam.

The displacement measuring device is preferably a linear voltage differential transformer.

In the field of paper-making, a paper-making machine in accord with the invention and having the preferred control means may be adapted to have the nozzle profile automatically controlled. To this end the machine may further comprise a computer connected to each adjustment device to supply the relevant input signal thereto and a gauge device mounted downstream of the wire to measure the grammage profile of the paper web across the width of the web. The gauge device is coupled to the computer to supply profile-measurement signals thereto. The computer has entered into it and stores a desired grammage profile for the web and is programmed to compute a profile for the delivery height of the nozzle that will produce the desired grammage profile. The computer supplies the input signals to the adjustment devices in accord with the computed profile for the nozzle delivery height.

Such an automatic control system takes advantage of the relatively rapid and precise response of the electro-hydraulic adjustment devices, aided by the measurement of the local delivery height at each device. As will be explained hereinafter the computation of the delivery height profile is in practice more complex than a simple adjustment of each adjustment device in dependence on whether the gauge measurement on the portion of the paper web longitudinally aligned with the adjustment device in question is above or below a set value. In the delivery of feed stock through a slice the adjustment of one device also affects delivery at neighbouring devices and account is taken of this.

## BRIEF DESCRIPTION OF THE DRAWINGS

The invention and its practice will be further described with reference to the accompanying drawings in which:

Fig. 1 is a somewhat diagrammatic cross-sectional view, taken longitudinally of the direction of movement of the wire, of one of a plurality of adjustment devices installed in accord with the present invention at the slice of a paper-making machine;

Fig. 2 is a similar view of a modified device having the position measuring means of Fig. 1 separately mounted;

Fig. 3 is a simplified diagram of the servovalve used as an actuator in the adjustment device, and _

Fig. 4 is a block diagram indicating a control system into which a series of adjustment devices is incorporated.

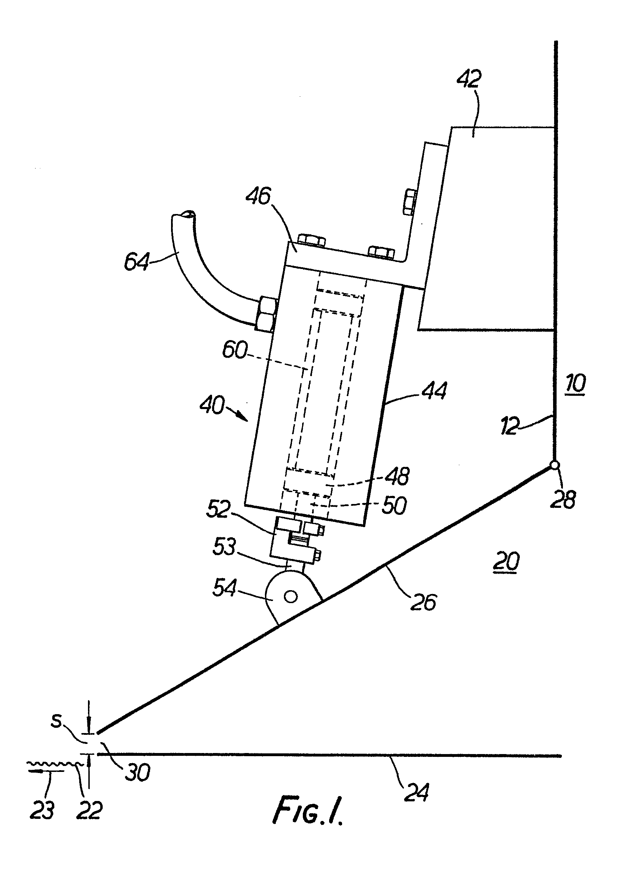

Referring to Fig. 1, the headbox 10 of a paper-making machine has a forward end wall 12 from which leads a projection slice 20 through which stock is delivered to the Foudrinier wire 22 moving in the direction of the arrow 23. The projection slice comprises a fixed lower slice lip 24 and an upper slice lip 26 pivotally mounted at 28 to the headbox and converging toward the lower lip in the delivery direction to form a horizontal output nozzle 30 which extends transversely across the wire - perpendicular to the direction of wire motion - and whose height S (in the vertical direction) is to be controlled so as to control the delivery of stock to the wire. To pivot the upper lip 26 to control the nozzle height a series of adjustment devices 40, just one of which is shown, are mounted across the upper slice lip to control the nozzle height at the respective locations across the projection slice and thereby control the grammage of the web being formed.

The apparatus as described thus far in general terms is conventional and the machine itself need not be discussed further. Attention will be concentrated on the particular design and arrangement of the adjustment devices 40. The adjustment devices are all of like construction and a description need be given of just a single device.

Mounted transversely on the front wall 12 of the headbox 10 is a beam 42 to which the housing 44 of each device 40 is secured by a respective bracket 46.

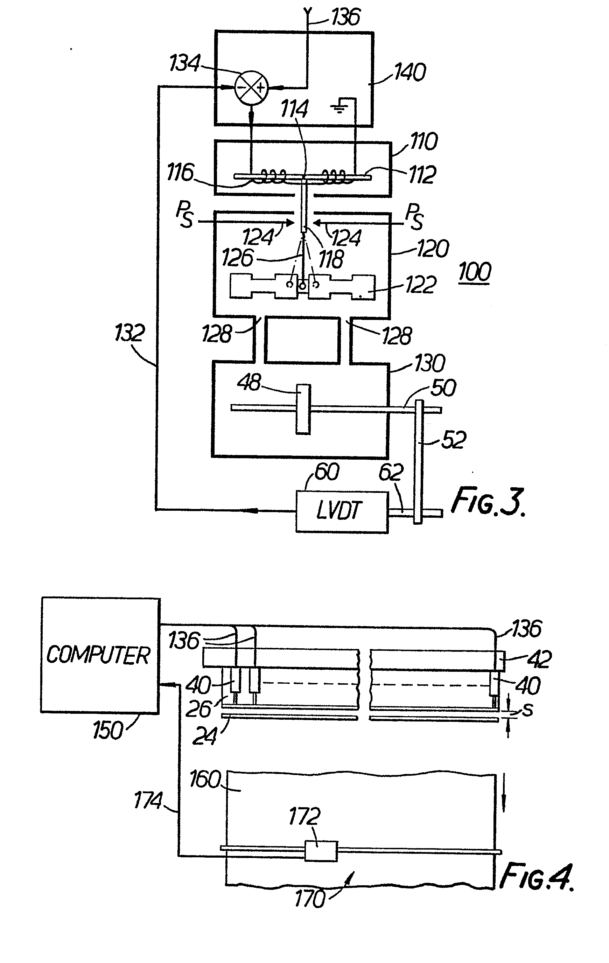

Among the parts in the housing is an actuator including a servo motor having a double-acting piston 48 with a piston rod 50 projecting out of the housing to provide the actuating member. The rod 50 is coupled by a clamp 52 to an extension rod 53 that is pivotally mounted to a pivot assembly 54 secured part way along the lip 26 in the direction of wire motion. The actuator also contains a servo control valve for the servo motor and an electrically-operated torque motor for driving the control valve as will be discussed hereinafter with reference to Fig. 3.

The housing also contains a precision displacement measuring device 60 that is aligned with the piston rod 50. The device 60 is constituted by a linear voltage differential transformer (LVDT). The transformer 60 has an axially movable core (not shown) from which an integral member 62 axially extends. The member 62 (Fig. 3) is parallel with rod 50 and connected in the clamp 52 to move with the rod. LVDTs are well known displacement-measuring devices and need no further description here. From the device 60 there is obtained an electrical output voltage that is a linear function of displacement.

The housing also contains an inlet and an outlet for pressure fluid, one 64 of which is seen in Fig. 1. The preferred actuator is normally intended for operation with oil as the working fluid. In the present case it is preferred to work with a water-based fluid so that any leakage will not harm the web being formed.

In the device of Fig. 1 the datum against which displacement is measured is effectively the wall 12 of the headbox. This wall is subject to forces engendered by the actuators of the series of devices 40 and small pressure fluctuations within the headbox. Consequently the wall may flex to a small extent but sufficient to render the displacement measurements of nozzle delivery height as referred to the fixed lower slice lip less accurate than desired.

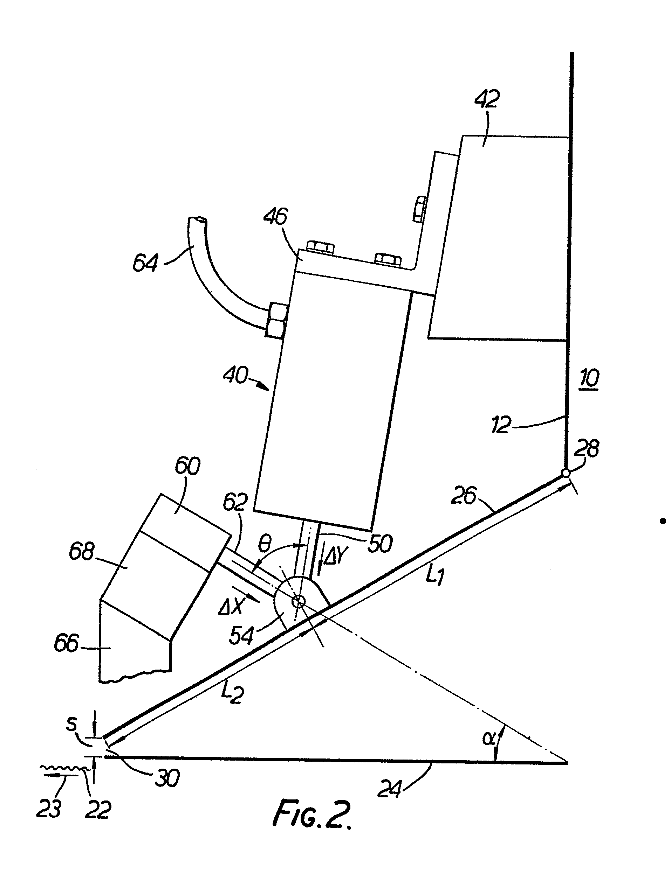

Referring now to Fig. 2 of the accompanying drawings, there is shown a modification of the device of Fig. 1 in which the displacement measuring device is mounted independently of the actuator.

In Fig. 2 the adjustment device 40 is constituted by the electro-hydraulic actuator having the same construction and arrangement as already described. The LVDT 60 associated with each device 40 has its body secured to a beam 68. The beam is mounted above and perpendicular to the direction of movement of the wire and is supported at each end by any suitable support 66 secured to the base of the machine. The beam thus provides a displacement-measurement datum that is fixed relative to the lower slice lip from which the nozzle delivery height is to be measured. The core extension member 62 of the LVDT is secured to the pivot assembly 54 so that the extension member 62 moves with displacements of the servo motor piston rod 50.

It will be noted that the core extension displacement is not now equal to that of the actuator but is directly proportional thereto by a factor derived from the geometry of the assembly. Referring to Fig. 2, for small displacements:

$$\Delta X = \Delta Y . \text{Cos } \theta \text{ , and } \quad \Delta S = \frac{(L_1 + L_2) . \Delta X}{L_1 . \text{Sin } \alpha}$$

where $\Delta X$ and $\Delta Y$ are displacements of the LVDT 60 and piston rod 50 respectively, and $\theta$ is the angle between their lines of action; $\alpha$ is the angle made by the line of action of the LVDT to the lower slice lip, and $L_1$ and $L_2$ are the distances from the pivot point 28 of the upper slice lip to the pivot assembly 54 and from this assembly to the end of the lip respectively. This geometry is readily taken into account by the control system to be described in setting the adjustment for each device 40.

Turning now to the devices 40 in more detail, it is presently contemplated that the actuator of each device be based on the Series 78 servo valves made by Moog Controls Ltd., of Ashchurch, Tewkesbury, Gloucestershire, England, a subsidiary of Moog Servocontrols, Inc. of East Aurora, New York, U.S.A. The main parts of such a device are diagrammatically illustrated in Fig. 3. Literature containing detailed information is available from Moog Servocontrols, Inc., and for a fuller description of this type of servo valve attention is also directed to U.S. patents 3,023,782 and 3,228,423.

Referring now to Fig. 3, there is shown in a diagrammatic form the major elements of the actuator assembly 100 comprising a torque motor 110, servo control valve system 120 and servo motor 130. The torque motor comprises a balanced armature 112 located in the field of a permanent magnet assembly (not shown) to deflect about pivot point 114 in dependence upon the magnetic field induced in the armature by current applied to energizing coils 116. The deflection is applied to the servo control valve 120 through an output armature flapper 118 that transmits the armature deflection to the servo control valve 120. The valve includes a spool 122 that rests in a central, neutral control position. The spool is movable to right or left in dependence on the direction of armature deflection. The flapper controls the relative entry of pressure fluid $(P_S)$ through a pair of opposed nozzles - indicated by arrows 124 - that, when the armature is deflected, develops a force on the spool (through means not shown) to move it in a corresponding direction. The spool 122 is coupled to the flapper through a cantilever spring 126 that produces a mechanical feedback torque which causes the spool to adopt a position at which the feedback torque balances that of motor 110 and which is a linear function of the input current to coils 116. The armature is restored to its neutral position at this balance position.

The spool 122 controls ports 128 leading to opposite sides of the piston 48 of the servo motor section 130, the spool opening one or other port to an extent proportional to the magnitude and polarity of the coil current in the torque motor. The piston is thus displaced to develop output power, the servo control valve section 120 acting as an hydraulic amplifier between the torque motor and servo motor. The servo piston velocity is a function of the torque motor current at a given fluid pressure $P_S$. The requirement is that the flow of fluid to the motor be terminated when its desired adjustment position is reached. This is achieved by electrical feedback using the LVDT 60 whose core extension 62 is connected by clamp 52 to the output rod 50 of the servo piston 48. The highly accurate position-indicative signal obtained from the LVDT 60 (whose other electrical connections are not shown) is applied to a comparison unit 140 over line 132 in which it is compared by a summing circuit 134 with an input control signal applied over the input line 136 representative of the desired height of the slice opening. The output signal from the summing circuit causes the armature 112 to deflect until signals over lines 132 and 136 are identical. A computer as mentioned below can include any weighting factors, including the geometry of Fig. 2, in calculating the value of the input control signal. The rest condition of the servo motor at a given displacement requires a zero output from the summing circuit to the torque motor.

The adjustment device of Fig. 3 operates with nominally zero position error and the simple direct coupling of the elements to the upper slice lip shown in Figs. 1 and 2 is preferred to minimise the possibility of mechanical backlash. The system also does not require a particularly high stability of pressure of the pressure fluid $P_S$. This only influences the response velocity of the servo control, not the final position.

The Series 78 servo valves available for the above task from Moog Servocontrols have the servo motor 130, servo control valve 120 and torque motor 110 constructed in a single compact housing, the torque motor being isolated from the hydraulic fluid. The LVDT 60 is also available located within the housing (in the Fig. 1 assembly) to provide a compact and reliable unit at relatively low cost.   It is to be noted that the devices also contain a mechanically settable null adjustment (zero offset) which assists in initial setting up.

The servo valves described with reference to Fig. 3 are primarily designed for use with oil as the pressure fluid.   It is desirable in paper making to use a servo fluid that will avoid as far as possible the risk of spoiling the paper product should any leakage occur.   One possibility that comes to mind is to use clean water.   More preferable, and satisfactory for use with the above-mentioned Series 78 valves of Moog Servocontrols, Inc., is the use of water and    ethylene glycol or similar aqueous mixtures as the servo fluid.   The water-based fluid minimises any possibility of damaging the paper product in the event of leakage and the glycol or other additive acts as a corrosion inhibitor within the servo . mechanism.    .  -

The use of devices as described with reference to Fig. 3 is also advantageous in connection with automatic control systems. Such a system is shown in broad outline in Fig. 4.   The figure diagrammatically illustrates a number of devices 40 arranged across· the upper slice lip.   In practice, as already mentioned, at least ten and possibly up to eight times that number of devices may be · required to control the nozzle height S across the wire.   The devices 40 may be individually controlled manually or by a computer 150 that is responsive to measurements made transverse of the web 160 by a gauge device 170 located at some downstream location in the paper-making machine, and that issues input signals to the respective input lines 136 of the devices 40 over a multi-line bus 152. The gauge 170 may, for example, comprise a gauge head 172 that is regularly reciprocated across the web to provide a signal on line 174 that is a profile of the weight of the web across its width (more strictly at an angle to the web path allowing for the motion of the web). The computer system is programmed to analyse the profile across the web, to compute the nozzle profile required to obtain a desired grammage profile and to apply signals on lines 136 to adjust the devices 40 to obtain the desired profile. The latter is entered and stored in the computer. This adjustment is in fact complex. For example, a closing of the nozzle height by one device to reduce web thickness will tend to pile up stock to either side requiring adjustment of neighbouring devices. Because of this interaction, the computer uses the gauge measurements to determine a profile for the nozzle height across the wire that will provide the desired weight profile. The computer signals the individual devices in accord with its calculated profile. The electro-hydraulic servo control now proposed is well suited for incorporation in a-comprehensive control of this kind.

The apparatus described above has dealt with the control of a projection slice. It will be appreciated that the devices 40 can be connected to adjust a vertically-acting gate slice. The servo valves described are capable of developing the high actuating forces required, being operable at pressures of about 1000 psi (6.85 MPa). It will be appreciated, however, that the hydraulic actuator has the advantage that the upper limit of force it can apply is equal to the supply pressure multiplied by the piston area, that is the area of the piston 48 in the servo motor of Fig. 3.

Thus by suitable choice of pressure and piston dimensions, the device may be rendered fail safe without introducing backlash in the system.

Mention has already been made of the control of the nozzle profile in a die extrusion apparatus such as disclosed in U.S. patents 3,940,221 and 2,938,231. It will be appreciated that the electro-hydraulic adjustment devices that have been described herein - which utilise actuators having hydraulic servo motors and displacement measuring devices used in controlling the servo motors - can be employed in die extrusion apparatus in place of the thermal rod type of control. The actuators can be made part of a complete control system such as shown in Fig. 4. In such a case downstream monitoring of the thickness profile of the sheet or film produced by the extrusion apparatus can be done by a gauge appropriate to the plastics material, for example as by use of a beta-ray or X-ray gauge disclosed in patent 3,940,221.

It will also be appreciated that the nozzle control taught by the present specification can be applied to controlling the delivery of other flowable materials through an adjustable elongate nozzle.

- 1 -

Claims

1.    Apparatus comprising first (26) and second (24) relatively displaceable parts defining an elongate nozzle (30) through which a flowable material is deliverable, the parts being relatively displaceable to control the delivery height (5) of the nozzle (30), and control means for adjusting the delivery height (5) comprising a plurality of adjustment devices (40) mounted at locations across the width of the nozzle (30) and each connected to one of said parts (24, 26) to locally adjust the delivery height (5), characterised in that each device (40) comprises an actuator (100) including an hydraulic servo motor (130) having an output member (50) connected to the said one part and means (110, 120, 140) for controlling the servo motor (130) in response to an input signal (136) representing a desired local position of the said one part to which the device (40) is connected, a displacement measuring device (60) connected to said output member (50) to provide a signal (132) representing the position of said output member, and said control means (100) including means (134) for comparing the input signal (136) with the position signal (132) to control the servo motor (130) in dependence upon the comparison.

2.    Apparatus as claimed in Claim 1 in which said control means (100) comprises a servo control valve (120) to control the flow of pressure fluid to said servo motor (130) and an electrically energized motor (110) to control the position of said servo control valve (120), said electrically energized motor (110) being energized by a signal dependent on the comparison of the input signal (136) and the position-representing signal (132).

3. Apparatus as claimed in Claim 1 or 2 in which the output member (50) of each adjustment device (40) is connected to said first part (26) and the second part (24) is fixed.

4. Apparatus as claimed in Claim 3 in which each displacement measuring device (60) comprises two relatively movable portions whose relative displacement is sensed, one portion (62) being coupled to the output member (50) of the servo motor (130) and the other portion supported fixedly with respect to said second fixed part (24).

5. Apparatus as claimed in Claim 1 or 2 in which said displacement measuring device (60) comprises two relatively movable portions whose relative displacement is sensed, one portion (62) being coupled to the output member (50) of the servo motor (130) and the other portion supported fixedly with respect to a bed portion of the apparatus.

6. Apparatus as claimed in any preceding claim in which each said displacement measuring device (60) is a linear voltage differential transformer.

7. A paper-making machine in which feed stock is delivered from a headbox (12) on to a wire (22) through a slice (20) for controlling the delivery of the stock, the slice (20) comprising a movable part (26) extending across the wire to control the delivery height (5) of the slice, and the machine including a plurality of adjustment devices(40) mounted at locations across the wire (22) and connected to the movable part (26) to locally adjust the delivery height (5), wherein each device (40) comprises an actuator (100) including an hydraulic servo motor (130) having an output member (50) connected to said part (26) and means (110, 120) for controlling the servo motor (130) in response to an input signal (136) representing a desired local position of said part, a displacement measuring device (60) connected to said output member (50) to provide a signal (132) representing the position of said output member, and said control means (110, 120, 140) including means (134) for comparing the input signal (136) with the position signal (132) to control the servo motor (130) in dependence upon the comparison.

8. A paper-making machine as claimed in Claim 7 in which said control means (110, 120, 140) comprises a servo control valve (120) to control the flow of pressure fluid to said servo motor (130) and an electrically energized motor (110) to control the position of said servo control valve (120), said electrically energized motor (110) being energized by a signal dependent on the comparison of the input signal (136) and the position-representing signal (132).

9. A paper-making machine as claimed in Claim 7 or 8 in which said displacement measuring device (60) comprises two relatively movable portions whose relative displacement is sensed, one portion (62) being coupled to the output member (50) of the servo motor (130) and the other portion supported fixedly with respect to a second fixed part (24) of the slice (20).

10. A paper-making machine as claimed in Claim 7 or 8 in which said displacement measuring device (60) comprises two relatively movable portions whose relative displacement is sensed, one portion (62) being coupled to the output member (50) of the servo motor (130) and the other portion supported fixedly with respect to the bed of the machine.

11.    A paper-making machine as claimed in Claim 8 in which the hydraulic fluid for each actuator (100) is water-based.

12.    A paper-making machine as claimed in Claim 11 in which the hydraulic fluid is a mixture of water and ethylene glycol.

13.    A paper-making machine as claimed in Claim 8 further comprising a computer (150) connected to each adjustment device (40) to supply said input signal (136) thereto; a gauge device (170) mounted downstream of said wire (22) to measure the grammage profile of the paper web (174) across the width of the web, said gauge device (170) being coupled to said computer (150) to supply profile-measurement signals thereto, and said computer storing a desired grammage profile for the web and being programmed to compute a profile for the delivery height (S) of the nozzle (30) that will produce the desired grammage profile and to supply input signals (136) to said adjustment devices (40) in accord with the computed profile for the nozzle delivery height (S).

FIG.I.

Fig.2.

Fig.3.

Fig.4.